# DEMANDE DE BREVET EUROPEEN

(11) **EP 3 506 603 A1**
(43) Date de publication de la demande: **03.07.2019**
(21) Numéro de dépôt: 18215475.7
(22) Date de dépôt: 21.12.2018
(51) Int. Cl.: H04L 29/08

(54) **PROCÉDÉ DE DÉVELOPPEMENT D'UNE ONTOLOGIE ADAPTÉE À UN DOMAINE INDUSTRIEL PARTICULIER**

(30) Priorité: 28.12.2017 FR 1763309
(71) Demandeur: Atos Integration, 95870 Bezons (FR)
(72) Inventeur: CAMINEL, Thierry, 31000 Toulouse (FR)
(74) Mandataire: LLR

(57) **Abrégé**

Procédé de développement d'une nouvelle ontologie (32) adaptée à un domaine industriel, l'ontologie comprenant des concepts et des relations entre ces concepts, représentant le sens d'un champ d'informations, mis en oeuvre par ordinateur.
Tout d'abord, on recueille des concepts propres (33) à un premier acteur du domaine industriel et des concepts propres (34) à au moins un deuxième acteur du domaine industriel différent du premier acteur.
Ensuite, on constitue des relations entre ces concepts de la nouvelle ontologie (32) en reprenant des relations (35) d'au moins une ontologie pré-existante (36) et en ajoutant de nouvelles relations (37).

## Description

Le projet à l'origine de cette demande a reçu un financement de l'entreprise commune Clean Sky 2 dans le cadre du programme de recherche et d'innovation Horizon 2020 de l'Union européenne au titre de la convention de subvention n° 681858.

L'invention concerne le domaine de la science de l'information, plus particulièrement le développement et l'utilisation d'ontologies, et notamment l'utilisation d'ontologies par une plateforme en tant que service (PaaS).

Les technologies sémantiques représentent une information de manière ontologique, indépendante de l'usage, et donc peuvent interconnecter plusieurs représentations spécifiques d'une même information.

En informatique et en science de l'information, une ontologie est un ensemble structuré de concepts et de relations entre ces concepts représentant le sens d'un champ d'informations.

Par concept on entend notamment les concepts primitifs et les concepts définis. Un terme en tant que tel est qualifié de concept primitif alors qu'un terme regroupant l'association de plusieurs termes est qualifié de concept défini. Par exemple, les termes humain, mâle et femelle sont chacun des concepts primitifs, alors que le terme homme, associant les termes humain et mâle, est un concept défini.

Par relation entre les concepts on entend notamment l'ensemble des règles, des propriétés ou encore les relations de subsomption entre les concepts.

Une ontologie simple est par exemple un vocabulaire, c'est-à-dire une liste de concepts propres par exemple à une science, à une technique ou à un groupe.

Une ontologie plus complexe peut être une taxonomie, qui organise les concepts en hiérarchies, ou arbres de connaissances.

L'ontologie soutient des capacités de raisonnement de sorte à permettre d'avoir les mêmes langages pour représenter un grand nombre d'ensembles de données, et permettre de traiter de grands corpus de connaissances.

Dans un même domaine industriel, il est récurant que différents acteurs de ce domaine souhaitent ou doivent collaborer entre eux. Toutefois, chaque acteur, pour définir son activité, élabore ses propres concepts et le cas échéant, ses propres ontologies. Les échanges d'informations sont alors difficiles, chacun des acteurs utilisant des termes ou concepts qui lui sont propres. Ainsi, une même information peut être définie de façon différente entre deux acteurs d'un même domaine. Un lourd travail d'homogénéisation des concepts est alors nécessaire.

Il est connu de développer de grandes ontologies à partir d'une grande quantité de connaissances humaines extraites des textes. Ces ontologies sont généralement utilisées pour des applications de type cognitives. Les Assistants Intelligents Personnels, par exemple SIRI® proposé par la société Apple®, représentent les nouvelles applications cognitives. Ces Assistants Intelligents Personnels illustrent les avantages et la maturité des applications de l'intelligence artificielle basées sur les ontologies et l'apprentissage machine. Ils disposent de nombreux référentiels de connaissances pour les produits de leurs clients, capables de fournir des réponses aux questions posées en langage naturel, d'aider à la traduction, de permettre la compréhension de données provenant de différentes sources.

Ainsi, il est connu de développer des ontologies pour traiter un grand nombre d'informations, de concepts et de relations entre ces concepts. Cependant, les ontologies développées ne sont pas spécifiques à un domaine particulier, encore moins à l'activité spécifique d'un acteur, et ne sont donc pas adaptées pour être utilisées par différents acteurs d'un même domaine industriel pour collaborer ensemble. Il est donc difficile que les acteurs d'un même domaine industriel collaborent facilement ensemble, les concepts propres à un premier acteur devant être préalablement homogénéisés en fonction des concepts propres à d'autres acteurs.

L'invention a pour but de faire en sorte que tous les acteurs d'un même domaine industriel puissent facilement collaborer ensemble par l'intermédiaire d'une représentation commune des informations du domaine industriel.

A cet effet, l'invention a pour objet un procédé de développement d'une nouvelle ontologie adaptée à un domaine industriel, l'ontologie comprenant des concepts et des relations entre ces concepts, représentant le sens d'un champ d'information, mis en oeuvre par ordinateur, caractérisé en ce qu'il comprend les étapes suivantes :
- on recueille les concepts propres à un premier acteur du domaine industriel et des concepts propres à au moins un deuxième acteur du domaine industriel différent du premier acteur,
- on constitue des relations entre ces concepts de la nouvelle ontologie en reprenant des relations d'au moins une ontologie pré-existante et en ajoutant de nouvelles relations.

Cela permet que la nouvelle ontologie soit développée à partir des concepts propres aux acteurs du domaine industriel. En développant la nouvelle ontologie à partir de concepts propres à un premier acteur du domaine industriel et de concepts propres à au moins un deuxième acteur industriel différent du premier acteur, on favorise l'efficacité de la collaboration entre les différents acteurs d'un même domaine industriel. Ainsi, un premier acteur du domaine industriel peut facilement collaborer avec un second acteur grâce la nouvelle ontologie permettant une représentation commune des informations échangées entre acteurs.

Le procédé de développement d'une nouvelle ontologie adaptée à un domaine industriel selon l'invention peut également comporter les caractéristiques suivantes :
- On recueille au moins un concept supplémentaire propre au domaine industriel.

Ainsi, cela permet de compléter la nouvelle ontologie avec des concepts adaptés au domaine industriel.
- On reprend au moins une relation supplémentaire entre ces concepts propre au domaine industriel.

Ainsi, cela permet de compléter la nouvelle ontologie avec des relations entre les concepts adaptés au domaine industriel.
- l'ontologie pré-existante dans laquelle on reprend les relations entre les concepts est une ontologie d'au moins un acteur du domaine industriel.

Ainsi, cela permet de compléter la nouvelle ontologie avec des relations entre les concepts spécifiques aux acteurs du domaine industriel.
- Le domaine industriel est le domaine aéronautique.

Cela permet de développer une nouvelle ontologie spécifique au domaine aéronautique. Ainsi, les concepts et relations entre ces concepts issus des nombreux acteurs de ce domaine, notamment les constructeurs, les sous-traitants, les services de maintenance ou encore les autorités administratives, peuvent être compris dans une même ontologie.

L'invention concerne également un programme d'ordinateur caractérisé en ce qu'il comprend des instructions de code de programme pour l'utilisation d'une nouvelle ontologie obtenue par le procédé selon l'invention lorsque le programme est exécuté par un processeur.

Cela permet d'utiliser, à l'aide d'un ordinateur, la nouvelle ontologie obtenue par le procédé selon l'invention, de sorte à homogénéiser les concepts d'un premier acteur d'un domaine industriel avec les concepts d'au moins un second acteur. Ainsi, les acteurs d'un même domaine industriel puissent facilement collaborer ensemble par l'intermédiaire d'une représentation commune des informations du domaine industriel.

L'invention concerne enfin une plateforme en tant que service (PaaS) comprenant :
- une couche logicielle dans laquelle au moins une application est hébergée,
- une couche plateforme comprenant au moins un service nécessaire pour fournir des ressources pour un autre service,
- une couche d'information gérant au moins une interaction d'un utilisateur avec au moins un service ou au moins une application,
- une couche infrastructure fournissant une infrastructure matérielle adaptée à une plateforme en tant que service,
caractérisée en ce que la couche logicielle comprend un programme d'ordinateur selon l'invention.

Cela permet de fournir aux acteurs d'un domaine industriel un environnement collaboratif capable d'intégrer des données provenant de sources multiples et permettant le traitement, l'analyse et la création de connaissances à partir des données. Les données et la valeur ajoutée créée par son analyse, ainsi que l'intégration des connaissances, sont alors accessibles aux différents acteurs.

La plateforme en tant que service (PaaS) selon l'invention peut également comporter les caractéristiques suivantes :
- Au moins une application est stockée dans au moins un conteneur logiciel.

Cela permet d'exécuter une application dans un environnement virtuel en stockant notamment tous les fichiers ou bibliothèques nécessaire à son utilisation dans un conteneur. Ainsi, le conteneur se connecte directement au noyau du système d'exploitation et sans avoir à créer une nouvelle machine virtuelle à chaque fois qu'une autre application utilise le même système d'exploitation.
- La plateforme en tant que service comprend en outre un pare-feu.

Cela permet d'analyser chaque paquet de données entrant dans la plateforme en tant que service pour vérifier qu'il ne contient aucun élément malveillant. Ainsi, la plateforme en tant que service est défendue contre par exemple les virus, vers, chevaux de Troie et attaques de piratage par force brute.
- La plateforme en tant que service comprend en outre des moyens d'équilibrage de charge.

Cela permet de répartir le trafic entre plusieurs ordinateurs ou même entre plusieurs processeurs ou disques d'un même ordinateur.

L'invention sera mieux comprise à la lecture de la description qui va suivre, donnée uniquement à titre d'exemple et faite en se référant aux dessins dans lesquels :
- la figure 1 est une représentation schématique de l'architecture de la plateforme en tant que service selon l'invention.
- La figure 2 est une représentation schématique du procédé de développement d'une nouvelle ontologie adaptée à un domaine industriel selon l'invention.

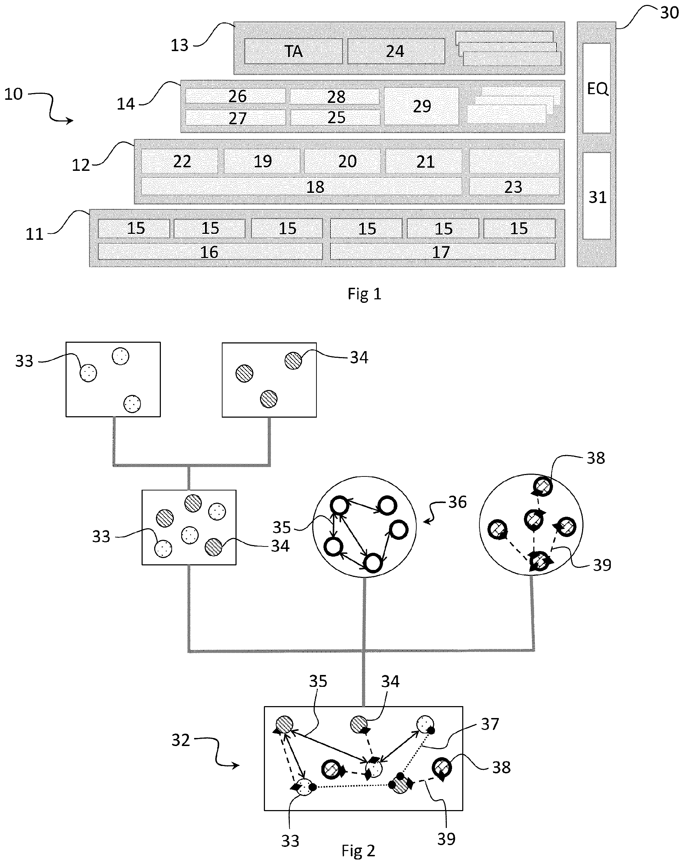

On a représenté sur la figure 1 un environnement collaboratif et plus particulièrement une plateforme en tant que service (PaaS) 10. La plateforme en tant que service 10 est organisée en couches, chaque couche étant responsable d'une tâche dédiée. La plateforme en tant que service (PaaS) 10 comprend une couche d'infrastructure 11, une couche plateforme 12, une couche d'information 13 et une couche logicielle 14.

La couche logicielle 14, la couche plateforme 12 et la couche d'information 13 comprennent chacune un ensemble de composants destinés à être déployés et hébergés au sein de la couche d'infrastructure 11. Ces composants sont agnostiques pour un fournisseur de nuage informatique, habituellement appelé cloud, ce qui signifie qu'ils peuvent être déployés sur n'importe quelle infrastructure de fournisseur de cloud.

Alors que les couches d'information 13 et logicielle 14 sont dédiées aux applications destinées à des utilisateurs finaux, les couches plateforme 12 et d'infrastructure 11 sont entièrement dédiées à la gestion de l'infrastructure de la plateforme en tant que service 10 et à l'orchestration des services en cours d'exécution.

La couche d'infrastructure est 11 une infrastructure matérielle adaptée à la plateforme en tant service 10. En effet, la couche d'infrastructure 11 fournit les conditions requises pour un moteur cloud notamment en termes de nombre de machines virtuelles 15, en termes de ressources matérielles 16 liés aux spécifications des machines virtuelles 15, par exemple les spécifications concernant le système d'exploitation, la mémoire à accès non séquentiel ou RAM, le nombre d'unités centrales de traitement ou processeurs, ou encore en termes de ressources de stockage 17, par exemple le nombre de disques internes. Enfin, la couche d'infrastructure 11 fournit les conditions requises pour le moteur cloud en termes de spécifications des réseaux, par exemple les spécifications des réseaux publics et/ou privés, les spécifications des réseaux de routage inter-domaine sans classe, dits en anglais « Classless Inter Domain Routing » ou CIDR.

Ces conditions requises sont adaptées en fonction des cas d'utilisation de la plateforme en tant que service 10 qui doivent être pris en charge par la plateforme en tant que service 10 et des fonctionnalités requises par les utilisateurs finaux.

Dans l'exemple décrit, la couche d'infrastructure 11 de la plateforme en tant que service 10 comprend notamment un cluster de onze machines virtuelles 15 (dont seulement six sont représentées sur la figure 1) configurées chacune avec une ressource matérielle 16 de quatre unités centrales de traitement 16 (CPU), huit Giga-octet de RAM et fonctionne sous Linux CentOS 7© comme système d'exploitation. Les ressources de stockage 17 sont adaptées à la configuration de la plateforme en tant que service 10.

Cette couche 11 fournit également des procédures de déploiement individuelles pour chacun des composants nécessaires à l'utilisation de la plateforme en tant que service 10 sous la forme de scripts Ansible© qui est un outil de déploiement et de gestion d'applications.

Les ressources matérielles fournies au niveau de la couche d'infrastructure 11 sont réparties de manière à fournir des capacités de calcul distribuées utilisant le framework Spark©, un stockage de systèmes de fichiers distribués avec GlusterFS© et une base de données dont la gestion n'est pas seulement en langage de requête structurée, dit en anglais « Not only Structured Query Language » ou NoSQL, par exemple la base MongoDB© NoSQL.

La couche plateforme 12 comprend les services nécessaires à la fourniture des ressources pour un service, au déploiement du service et à la gestion de son cycle de vie. La couche plateforme 12 fournit également les mécanismes permettant aux services de chainer le traitement des applications, dits « pipeline », et d'accéder aux résultats ou sorties d'un autre service.

La couche plateforme 12 comprend un service d'orchestration de clusters 18 de services s'appuyant sur la technologie Kubernetes© (K8S) proposée par la société Google© et la technologie des conteneurs pour orchestrer et programmer les services. En effet, on regroupe des applications à l'intérieur des conteneurs. Par la suite, ces conteneurs sont gérés par Kubernetes©. Ainsi, Kubernetes© participe à une fonction d'équilibrage de charge, de mise à l'échelle et de gestion des ressources.

On notera que la plateforme en tant que service 10 comprend des moyens d'équilibrage de charge EQ pouvant comporter un organe matériel ou non, par exemple un routeur, un switch, un système d'exploitation ou un logiciel applicatif.

Par ailleurs, la couche plateforme 12 comprend des services d'encapsulation, dit en anglais « wrapper services ». Dans l'exemple décrit, ces services ont été développés sur les logiciels Akka© et Scala© et comprennent notamment :
- un service de gestion 19 des services pour déployer des applications à l'intérieur de la couche plateforme 12 et pour fournir des ressources matérielles 16 selon les spécifications du service. Ainsi, cela permet de gérer le cycle de vie d'une application sur la plateforme en tant que service 10. Le service de gestion des services 19 permet en outre aux utilisateurs d'étendre la couche plateforme 12 en ajoutant de nouveaux services et en contrôlant leur déploiement et leur exécution ;
- un service de gestion des données 20 pour gérer le stockage des données téléchargées dans la plateforme en tant que service 10, mais aussi le téléchargement des données effectivement stockées dans le système de fichiers distribués. Ce service de gestion 20 permet en outre de charger des données depuis des sources extérieures à la plateforme en tant que service 10, par exemple depuis une base de données externe ;
- un service pour chainer le traitement des applications 21, dit en anglais « service pipeline », pour contrôler l'enchaînement correct des applications requises dans une chaîne d'applications lancées. Ce service 21 interagit avec le service de gestion des services 19 pour déployer les applications tierces nécessaires. Le service 21 permet donc de chainer des traitements logiciels.

Les services 19, 20, 21 interagissent avec Kubernetes© en utilisant l'API REST de Kubernetes© et ils fournissent également leurs propres applications de programmation d'applications, dit en anglais « Application Programming Interfaces » ou API, et plus particulièrement des API de Transfert d'Etat Représentatif, dit en anglais « Representational State Transfer » ou REST, de sorte que la couche d'information 13 interagisse avec les services 19, 20, 21 pour soumettre des demandes d'utilisateurs, par exemple déployer un nouveau service avec des exigences définies par l'utilisateur, annuler un déploiement de service ou pour afficher à l'utilisateur des informations relatives aux services qui leur sont disponibles ou à leurs services en cours d'exécution telles que par exemple des informations sur l'unité centrale de traitement, la mémoire, l'utilisation du stockage ou encore le temps de disponibilité.

La couche plateforme 12 comprend en outre un service d'approvisionnement 22 permettant l'allocation des ressources, c'est-à-dire notamment le déploiement des services logiciels de base sur l'infrastructure matérielle.

Par ailleurs, la couche plateforme 12 comprend également un service de gestion de la persistance des données 23 permettant la gestion des données de la plateforme, c'est-à-dire permettant de ne pas perdre de données grâce à un stockage persistant, que ce soit au niveau des bases de données que des fichiers.

Enfin, sur la figure 1, on a représenté schématiquement par un rectangle d'autres fonctionnalités classiques possibles compris dans la couche plateforme 12.

Ainsi, grâce à cette architecture, il est facile d'ajouter de nouvelles ressources matérielles 16 et/ou 17 à la plateforme en tant que service 10 en raison de sa nature de cloud, ce qui rend la couche plateforme 12 facilement évolutive en matériel pour les applications exigeantes. Par ailleurs, l'ajout de nouveaux services pour traiter les nouveaux cas d'utilisation ne nécessite aucune modification ou mise à niveau de la couche plateforme 12 et les services hébergés dans la plateforme en tant que service 10 sont accessibles à tout moment et en tout lieu. Enfin, toutes les lourdes tâches de gestion, d'équilibrage de charge, de gestion des pannes d'un service sont construites dans la plateforme en tant que service 10, ce qui réduit considérablement la charge de travail de maintenance de la plateforme en tant que service 10.

La couche d'information 13 gère les interactions des utilisateurs de la plateforme en tant que service 10 avec les composants, c'est-à-dire les services ou applications déployés dans la plateforme en tant que service 10. Les composants sont développés à l'aide de standards web tels que HTML5, CSS ou en anglais Cascading Style Sheets, et utilisent JavaScript framework AngularJS© pour gérer la navigation et fournir les écrans adaptés. La couche d'information 13 comprend notamment un service de tableau de bord administratif TA permettant de fournir les écrans adaptés notamment pour gérer les phases de connexion et de déconnexion des utilisateurs à la plateforme en tant que service 10, créer, déployer et surveiller des services au sein de la plateforme en tant que service 10, gérer les utilisateurs et les ressources de la plateforme en tant que service 10, ou encore faire appaître les applications tierces avec leurs interfaces utilisateurs respectives.

Par ailleurs, la couche d'information 13 comprend un portail 24 permettant à l'utilisateur d'accéder aux applications disponibles.

Enfin, sur la figure 1, on a représenté schématiquement par des rectangles d'autres fonctionnalités classiques possibles compris dans la couche d'information 13.

La couche logicielle 14 est la couche dans laquelle sont hébergées des applications, notamment les produits informatiques standards, en anglais dits « commercial off-the-shelf » ou COTS, c'est-à-dire les produits informatiques fabriqués en série et non pour un projet en particulier. Des serveurs web et applicatifs sont par exemple hébergés dans couche logicielle 14. La couche logicielle 14 permet que les applications qui n'ont pas d'interfaces graphiques, mais qui peuvent être accessibles via des prises réseau, puissent toujours être mises à la disposition des utilisateurs. En particulier, la couche logicielle 14 comprend les applications nécessaires au bon fonctionnement de la plateforme en tant que service 10, notamment et par exemple :
- un registre Docker© 25 qui héberge les images Docker© fournies par les acteurs du domaine industriel, une image étant par exemple un modèle qui permet de créer des conteneurs,
- une application de gestion des utilisateurs 26, par exemple l'application WSO2© serveur qui gère les comptes utilisateurs et leur authentification,
- un service Spark© 27 pour exécuter les calculs de traitement de données, le service Spark© 27 étant capable de fonctionner sur un cluster de serveurs et de traiter des données très rapidement, notamment grâce au stockage des bases de données en mémoire,
- une application de traitement sémantique 28 permettant la manipulation des métadonnées sémantiques,
- une application d'atelier scientifique 29, par exemple Jupyter© notebooks avec les bibliothèques scientifiques Python©, offrant un service de prototypage et de test d'algorithmes de façon collaborative entre utilisateurs.

Les applications, services ou technologies et langages mentionnés sont donnés uniquement à titre d'exemples et ne sont pas limitatifs.

On notera que pour ajouter une application tant que service disponible dans la plateforme en tant que service 10, l'utilisateur doit tout d'abord développer dans son propre environnement une application, puis conditionner cette application dans une image Docker©. Cette image Docker© peut être publiée et rendue disponible par le biais du registre Docker© 25. En effet, l'outil Docker© permet de regrouper une application et ses dépendances à l'intérieur d'un conteneur isolé permettant de déployer ce conteneur sur n'importe quelle plate-forme, permettant aux utilisateurs de créer, mettre à jour ou supprimer une application.

La plateforme en tant que service 10 permet également d'héberger et d'exécuter des applications tierces. Ainsi, tout acteur utilisant la plateforme en tant que service 10 peut spécifier son propre service, par exemple spécifier le nombre de CPU nécessaires, de mémoire RAM ou encore de capacité de stockage, via une interface dédiée, en utilisant les images Docker© disponibles dans le registre Docker© 25. Les acteurs ont également la possibilité de mettre en chaîne des services existants et/ou d'interagir avec d'autres services en cours d'exécution, par exemple une application qui crée des connaissances à partir de données brutes et enrichit l'entrepôt de connaissances.

Les images Docker© peuvent être cryptées afin d'empêcher la rétro-ingénierie/inspection des applications des différents acteurs.

Après le déploiement, le nouveau service apparaît sur le portail 24 dans la liste des services disponibles des utilisateurs, classés par exemple par thème, cette liste pouvant être adaptée en fonction des droits d'accès de l'utilisateur.

La plateforme en tant que service 10 peut comprendre une couche 30 relative à la sécurité. En effet, la couche de sécurité 30, peut comprendre un pare-feu 31 afin de filtrer le trafic réseau et les équilibreurs de charge EQ afin d'assurer que le trafic est bien équilibré sur tous les noeuds du cluster. On notera que le pare-feu 31 peut être logiciel et/ou un matériel pour permettre de surveiller et contrôler les applications et les flux de données.

Les couches logicielle 14 et plateforme 12, peuvent comprendre un moyen de contrôle d'accès qui garantit qu'un utilisateur ne peut accéder qu'aux données qui lui sont autorisées.

On notera que les services de la couche plateforme 12 tels que par exemple Kubernetes©, MongoDB© ou GlusterFS© permettent de contrôler l'accès pour isoler les processus utilisateurs et assurer la séparation des données.

Enfin, sur la figure 1, on a représenté schématiquement par des rectangles d'autres fonctionnalités classiques possibles compris dans la couche logicielle 14.

Par ailleurs, l'application de traitement sémantique 28 comprend un programme d'ordinateur exécutant, par l'intermédiaire d'un processeur, des instructions de code de programme pour l'utilisation d'une nouvelle ontologie obtenue par le procédé selon l'invention.

On décrira ci-dessous un procédé, selon l'invention, pour le développement d'une nouvelle ontologie 32 adaptée à un domaine industriel, schématisé sur la figure 2.

Tout d'abord, on recueille des concepts propres 33 à un premier acteur du domaine industriel et des concepts propres 34 à au moins un deuxième acteur du domaine industriel différent du premier acteur. Dans l'exemple décrit, de domaine industriel est le domaine aéronautique, le premier acteur étant un constructeur aéronautique et le second acteur étant un acteur de la maintenance aéronautique.

Ensuite, on constitue des relations entre ces concepts 33, 34 de la nouvelle ontologie 32 en reprenant des relations 35 d'au moins une ontologie pré-existante 36 et en ajoutant de nouvelles relations 37.

Ainsi la nouvelle ontologie 32 comprend des concepts 33, 34 et des relations 35, 37 entre ces concepts, représentant le sens d'un champ d'informations. De cette façon, le constructeur aéronautique et l'acteur de la maintenance aéronautique peuvent échanger des informations facilement compréhensibles par l'un ou l'autre des acteurs grâce à la nouvelle ontologie 32 commune aux deux acteurs.

Les nouvelles relations 37 sont notamment formées en transformant les données traditionnelles en triples, un triple étant un tuple, provenant de l'anglais « Table UPLEt », c'est-à-dire un sujet, un attribut et un objet, dans lequel l'attribut indique le type de relation entre le sujet, par exemple un concept 33 du domaine industriel, et l'objet, c'est-à-dire un autre concept 34 ou une valeur numérique.

Avantageusement, on recueille en outre au moins un concept supplémentaire 38 propre au domaine industriel ou au moins une relation supplémentaire 39 entre ces concepts propre au domaine industriel.

En variante, on recueille en outre au moins un concept supplémentaire 38 propre au domaine industriel et au moins une relation supplémentaire 39 entre ces concepts propre au domaine industriel.

De façon avantageuse, l'ontologie pré-exitante 36 dans laquelle on reprend les relations 35 entre les concepts est une ontologie d'au moins un acteur du domaine industriel.

La plateforme en tant que service 10 ainsi conçue permet à différents acteurs du domaine aéronautique de partager et d'intégrer facilement les données, en modélisant les données et les processus de maintenance pour s'assurer par exemple que les acteurs de la maintenance aéronautique et les constructeurs aéronautiques partagent les mêmes définitions des concepts 33, 34, 38 du domaine aéronautique.

L'invention n'est pas limitée au mode de réalisation présenté et d'autres modes de réalisation apparaîtront clairement à l'homme du métier. Notamment, le procédé de développement d'une nouvelle ontologie 32 n'est pas limité au domaine aéronautique mais peut être réalisé dans le domaine financier afin de normaliser le langage utilisé pour définir avec précision les termes, conditions et caractéristiques des instruments financiers, la structure juridique et relationnelle des entités commerciales, le contenu et les dimensions temporelles des données de marché, ainsi que les obligations légales et les aspects de processus des opérations d'entreprise. Le procédé selon l'invention peut également s'appliquer dans le cadre de la norme ISO 15296 destinée à faciliter l'échange d'informations entre fabricants, ingénieurs, constructeurs et propriétaires de l'industrie pétrolière et gazière.

## Revendications

1. Procédé de développement d'une nouvelle ontologie (32) adaptée à un domaine industriel, l'ontologie comprenant des concepts et des relations entre ces concepts, représentant le sens d'un champ d'informations, mis en oeuvre par ordinateur, **caractérisé en ce qu'**il comprend les étapes suivantes :
- on recueille des concepts propres (33) à un premier acteur du domaine industriel et des concepts propres (34) à au moins un deuxième acteur du domaine industriel différent du premier acteur,
- on constitue des relations entre ces concepts de la nouvelle ontologie (32) en reprenant des relations (35) d'au moins une ontologie pré-existante (36) et en ajoutant de nouvelles relations (37).

2. Procédé de développement d'une nouvelle ontologie (32) selon la revendication 1, comprenant en outre une étape de recueil d'au moins un concept supplémentaire (38) propre au domaine industriel.

3. Procédé de développement d'une nouvelle ontologie (32) selon la revendication 1 ou 2, comprenant en outre une étape de reprise d'au moins une relation supplémentaire (39) entre ces concepts propre au domaine industriel.

4. Procédé de développement d'une ontologie (32) selon l'une quelconque des revendications précédentes, dans lequel l'ontologie pré-existante (36) dans laquelle on reprend les relations (35) entre les concepts est une ontologie d'au moins un acteur du domaine industriel.

5. Procédé de développement d'une nouvelle ontologie (32) selon l'une quelconque des revendications précédentes, dans lequel le domaine industriel est le domaine aéronautique.

6. Programme d'ordinateur **caractérisé en ce qu'**il comprend des instructions de code de programme pour l'utilisation d'une nouvelle ontologie (32) obtenue par le procédé selon l'une quelconque des revendications 1 à 5 lorsque le programme est exécuté par un processeur.

7. Plateforme en tant que service (PaaS) (10) comprenant :
- une couche logicielle (14) dans laquelle au moins une application (26,28,27,25,29) est hébergée,
- une couche plateforme (12) comprenant au moins un service (18,19,20,21,22,23) nécessaire pour fournir des ressources pour un autre service,
- une couche d'information (13) gérant au moins une interaction d'un utilisateur avec au moins un service (18,19,20,21,22,23) ou au moins une application (26,28,27,25,29)
- une couche d'infrastructure (11) fournissant une infrastructure matérielle (16,17) adaptée à une plateforme en tant service,
**caractérisée en ce que** la couche logicielle (14) comprend un programme d'ordinateur selon la revendication 6.

8. Plateforme en tant que service (PaaS) (10) selon la revendication 7, dans laquelle au moins une application (26,28,27,25,29) est stockée dans au moins un conteneur logiciel.

9. Plateforme en tant que service (PaaS) (10) selon la revendication 7 ou 8, comprenant en outre un pare-feu (31).

10. Plateforme en tant que service (PaaS) (10) selon l'une quelconque des revendications 7 à 9, comprenant en outre des moyens d'équilibrage de charge (EQ).
